# EUROPÄISCHE PATENTSCHRIFT

(11) **EP 3 622 798 B1**
(45) Veröffentlichungstag und Bekanntmachung des Hinweises auf die Patenterteilung: **29.05.2024**
(21) Anmeldenummer: 19192796.1
(22) Anmeldetag: 21.08.2019
(51) Int. Cl.: A01D 34/835, A01D 41/14

(54) **ANORDNUNG ZUR STEUERUNG DER HÖHE UND/ODER NEIGUNG EINES ERNTEVORSATZES ZUR ERNTE STÄNGELARTIGEN ERNTEGUTS**
ASSEMBLY FOR CONTROLLING THE HEIGHT AND / OR INCLINATION OF A HARVESTER HEADER FOR HARVESTING STALK-TYPE CROPS
DISPOSITIF DE COMMANDE DE LA HAUTEUR ET / OU DE L'INCLINAISON D'UNE TÊTE DE RÉCOLTE DESTINÉE À LA RÉCOLTE DES PRODUITS DE RÉCOLTE EN FORME DE TIGE

(30) Priorität: 13.09.2018 DE 102018215616
(43) Veröffentlichungstag der Anmeldung: 18.03.2020
(73) Patentinhaber: Deere & Company, Moline, IL 61265 (US)
(72) Erfinder: Weitenberg, Clemens, 68163 Mannheim (DE); Effsing, Juergen, 68163 Mannheim (DE)
(74) Vertreter: Holst, Sönke

(56) Entgegenhaltungen:
- EP-A1- 1 145 619
- EP-A1- 1 374 661
- EP-A1- 3 269 223
- EP-A1- 3 272 199
- DE-A1- 19 916 645
- DE-A1-102010 028 605
- DE-A1-102018 105 858
- DE-U1- 29 519 842

## Beschreibung

### 19 192 796.1 - Beschreibung für die Vertragsstaaten AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM

Die Erfindung betrifft eine selbstfahrende Erntemaschine.

### Stand der Technik

Zur Ernte von stängelartigem Erntegut werden üblicherweise für die Getreideernte Schneidwerke und für die Maisernte Pflücker oder Maismähvorsätze verwendet. Diese Erntevorsätze werden an selbstfahrenden Erntemaschinen, wie Mähdreschern oder Feldhäckslern montiert und fördern im Erntebetrieb das abgeschnittene Erntegut in einen Einzugsförderer der Erntemaschine.

Da es für die ordnungsgemäße Funktion der Schneideinrichtung ist es wichtig, dass sie in einem bestimmten Winkel gegenüber dem Erdboden gehalten wird. Während die Schneidwerke und ihre Messer näherungsweise parallel zum Erdboden orientiert sein sollten beträgt dieser Winkel bei Maismähvorsätzen etwa 10°. Zudem sollte der Erntevorsatz in einer vorbestimmten Höhe über dem Erdboden geführt werden, um einerseits einen möglichst hohen Anteil des Ernteguts aufzunehmen, andererseits aber nicht in Erhebung des Bodens einzudringen. Für die Höhensteuerung des Erntevorsatzes werden geeignete Sensoren verwendet, die mechanisch oder berührungslos die Höhe des Erntevorsatzes über dem Boden erfassen und mit einer Steuerung verbunden sind, welche ihrerseits mittels eines fremdkraftbetätigten Aktors den Drehwinkel des Einzugsförderers der Erntemaschine um eine horizontal und quer zur Vorwärtsrichtung verlaufende Achse verstellen.

Der Winkel des Erntevorsatzes gegenüber dem Erdboden hängt von der Bodenkontur und auch von Parametern der Erntemaschine ab, insbesondere von der Größe der Räder. Zwecks einer Anpassung des Winkels des Erntevorsatzes beispielsweise an die Radgröße der Erntemaschine wurde eine mechanische Verstellung des Winkels des Erntevorsatzes gegenüber dem Einzugsförderer um die horizontal und quer zur Vorwärtsrichtung verlaufende Achse vorgeschlagen (DE 199 16 645 A1, DE 10 2010 028 605 A1), die jedoch während des laufenden Erntebetriebs keine Verstellung ermöglicht, um beispielsweise eine Anpassung an die Bodenkontur durchzuführen. Eine Verstellung des Erntevorsatzes um gegenüber dem Einzugsförderer um die horizontal und quer zur Vorwärtsrichtung verlaufende Achse mittels sensorbasierter, die Bodenkontur erfassender Sensoren wurde in der DE 295 19 842 U1, EP 1 145 619 A1 und EP 1 374 661 A1 beschrieben. Diese Anordnungen benötigen zwei Sensoren, von denen einer die Höhe des Schneidwerks über dem Boden misst, während ein zweiter Sensor dazu dient, die Erntemaschine durch Verstellung von höhenverstellbaren Rädern horizontal zu halten und auch den Schwenkwinkel des Erntevorsatzes steuert (DE 295 19 842 U1, EP 1 145 619 A1), während die EP 1 374 661 A1 vorschlägt, an zwei in Fahrtrichtung beabstandeten Stellen die Höhe des Erntevorsatzes über dem Boden zu erfassen und auf der daraus abgeleiteten Bodenneigung basierend die Aktoren zur Höhen- und Neigungsverstellung des Erntevorsatzes anzusteuern. Hierzu werden beispielsweise vom Erntevorsatz aus nach vorn blickende, berührungslos arbeitende Sensoren und in Fahrtrichtung dahinter angeordnete Tastbügel verwendet.

Unterhalb von Erntevorsätzen zur Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*)*.* Ein Maismähvorsatz mit einem derartigen Mulchgerät wird in der als gattungsbildend angesehenen EP 3 269 223 A1 gezeigt. Das um die Querachse frei schwenkbar am Erntevorsatz angebrachte Mulchgerät wird durch eine Feder oder einen Aktor nach unten vorgespannt und folgt mit einer Kufe der Bodenkontur.

### Aufgabe

Als nachteilig wird im Stand der Technik angesehen, dass zur Höhen- und/oder Neigungsverstellung des Erntevorsatzes zusätzliche Sensoren benötigt werden, die mechanisch oder berührungslos die Höhe des Erntevorsatzes über dem Boden erfassen, oder dass man eine sich in aufwändiger Weise selbsttätig gegenüber dem Erdboden ausrichtende Erntemaschine benötigt. Die berührungslosen Sensoren sind relativ preisaufwändig und die mechanischen Sensoren verhältnismäßig empfindlich gegen Beschädigungen.

Es wird demnach angestrebt, den erwähnten Nachteil zu vermeiden oder zu vermindern.

### Lösung

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Erntemaschine umfasst einen Erntevorsatz zur Ernte stängelartigen Ernteguts und eine Anordnung zur Steuerung der Höhe und/oder Neigung des Erntevorsatzes. Die Anordnung umfasst eine Steuereinrichtung, die mit einem Sensor zur Erfassung der Höhe des Erntevorsatzes über dem Boden und einem Aktor zur Kontrolle der Höhe und/oder Neigung des Erntevorsatzes verbunden und betreibbar ist, den Aktor abhängig von Signalen des Sensors zu kontrollieren. Am Erntevorsatz ist ein Mulchgerät mit einem Bearbeitungswerkzeug zur Zerkleinerung von Pflanzenstümpfen höhenbeweglich und der Bodenkontur folgend angebracht und der Sensor ist zur Erfassung der Position des Mulchgeräts gegenüber dem Erntevorsatz eingerichtet.

Mit anderen Worten ist der zur Ernte stängelartigen Ernteguts vorgesehene Erntevorsatz mit einem Mulchgerät zur Bearbeitung der nach dem Ernte im Boden verbleibenden Pflanzenstümpfe versehen, das höhenbeweglich und der Bodenkontur folgend am Erntevorsatz abgestützt ist. Die Position des Mulchgeräts gegenüber dem Erntevorsatz wird mittels eines Sensors erfasst, dessen Signale an eine Steuereinrichtung übergeben werden, die darauf basierend einen Aktor zur Verstellung der Höhe des Erntevorsatzes über dem Boden und/oder dessen Neigung um die Querachse kommandiert. Auf diese Weise erfüllt das Mulchgerät zwei Zwecke, nämlich das Bearbeiten der Pflanzenstümpfe und es dient als Fühler für den Sensor zur Ansteuerung des Aktors.

Die Steuereinrichtung kann mit einem ersten Aktor zur Kontrolle der Neigung des Erntevorsatzes um die horizontal und quer zur Vorwärtsrichtung verlaufende Achse, mit einem zweiten Aktor zur Kontrolle der Höhe des Erntevorsatzes gegenüber dem Erdboden und einem weiteren Sensor zur Erfassung der Höhe des Erntevorsatzes gegenüber dem Erdboden verbunden sein, der dem Mulchgerät bezüglich der Vorwärtsrichtung des Erntevorsatzes vorgelagert ist.

Die Steuereinrichtung kann betreibbar sein, die Aktoren im Sinne eines Einhaltens eines vorbestimmten Winkels oder Höhe des Mulchgeräts gegenüber dem Boden und eines vorbestimmten Winkels oder einer vorbestimmten Höhe des Erntevorsatzes gegenüber dem Boden einzustellen.

Der erste Aktor kann den Winkel des Erntevorsatzes gegenüber einem Einzugsförderer einer selbstfahrenden Erntemaschine um die horizontal und quer zur Vorwärtsrichtung verlaufende Achse verstellen und der zweite Aktor den Winkel des Einzugsförderers gegenüber der Erntemaschine um die horizontal und quer zur Vorwärtsrichtung verlaufende Achse verstellen.

### Ausführungsbeispiel

In der Zeichnung wird ein nachfolgend näher beschriebenes Ausführungsbeispiel dargestellt.

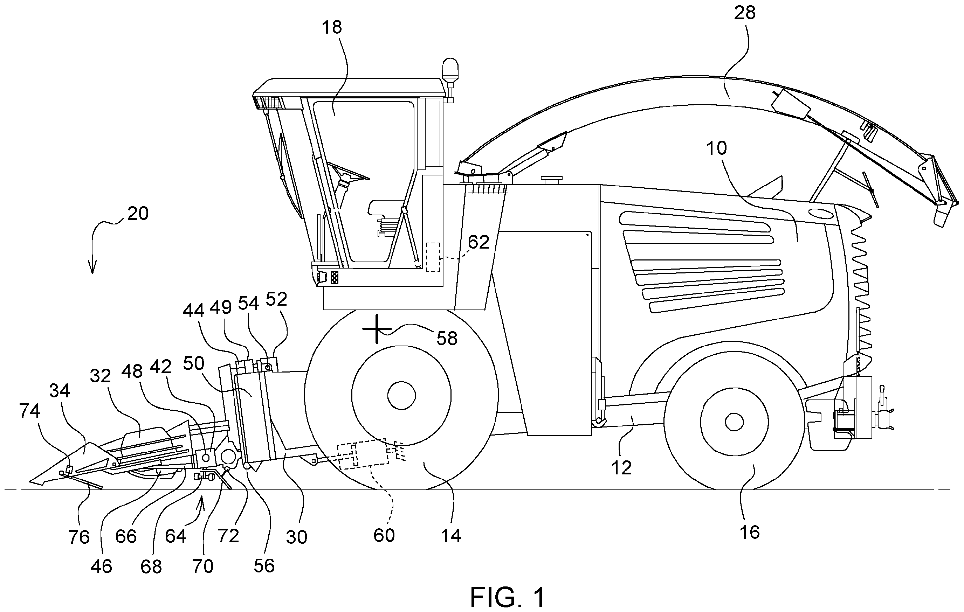

Die Figur 1 zeigt eine Seitenansicht einer Erntemaschine mit einem daran angebrachten Erntevorsatz, an dem ein oder mehrere Mulchgeräte angebracht sind, mit einer Anordnung zur Steuerung der Höhe und Neigung eines Erntevorsatzes.

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Mais, wird über einen Einzugsförderer 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern oder Schneidwerken Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil und zwei (bezüglich der Vorwärtsrichtung der Erntemaschine 10) seitlich links und rechts neben dem Mittelteil angeordneten Seitenteile umfasst. Die Seitenteile sind zum Straßentransport nach oben schwenkbar am Mittelteil befestigt und können zum Ernteeinsatz hydraulisch heruntergeschwenkt werden, so dass sie beim Erntebetrieb parallel zum Mittelteil verlaufen.

Der Erntevorsatz 20 ist in an sich bekannter Weise mit aus unteren Schneidscheiben und darüber angeordneten Förderscheiben mit um den Umfang verteilten Aussparungen zur Aufnahme von Pflanzenstängeln aufgebauten Ernteeinheiten 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie über Querfördertrommeln und Abgabefördertrommeln dem mit Einzugswalzen ausgestatteten Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil und eines jedem Seitenteil zugeordnet ist. An der Vorderseite des unteren Querträgers 42 sind Getriebegehäuse 46 angeschraubt, die zum Antrieb jeweils einer Ernteeinheit 32 dienen. Eine Antriebswelle 48 zum Antrieb der Ernteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist durch einen ersten Aktor 48 mit einer rückwärtigen Rahmenanordnung 50 verbunden, die sich durch hakenförmige Tragelemente 52 an komplementären Tragelementen 54 des Gehäuses des Einzugsförderers 30 abstützt. Der obere Querträger 44 ist durch sich vertikal erstreckende Träger und Verbindungsbleche mit dem unteren Querträger 42 verbunden. Die Rahmenanordnung 50 ist durch eine untere Schwenkachse 56 mit dem unteren Querträger 42 verbunden. Im Ergebnis ermöglicht es der erste Aktor 48, den Erntevorsatz 20 mit den Querträgern 42, 44 gegenüber der Rahmenanordnung 50 um die Schwenkachse 56, die sich horizontal und quer zur Vorwärtsrichtung erstreckt, zu drehen. Die Rahmenanordnung 50 ist durch die Tragelemente 52 lösbar am Einzugsförderer 30 angebracht. Zur Verstellung des Erntevorsatzes 20 um die Schwenkachse 56 könnte auch eine beliebige andere Verstellanordnung dienen, die eine Schwenkachse an der Oberseite des Einzugsförderers 30 oder an beliebiger anderer Stelle vorsieht.

Die Neigung des Einzugsförderers 30 um eine horizontal und quer zur Vorwärtsrichtung orientierte Drehachse 58, die beispielsweise mit der Drehachse der Häckseltrommel zusammen fallen kann, und (gemeinsam mit dem ersten Aktor 48) die Höhe und Neigung des Erntevorsatzes 20 über dem Erdboden bestimmt, wird durch einen zweiten Aktor 60 bestimmt, der von einer Steuereinrichtung 62 kontrolliert wird.

Rückwärtig jeder Ernteeinheit 32 ist jeweils ein Mulchgerät 64 angebracht. Das Mulchgerät 64 ist mit seiner Drehachse in seitlicher Richtung rückwärtig von der Drehachse der zugehörigen Ernteeinheit 32 angeordnet. Dort laufen im normalen Erntebetrieb die Pflanzen ein. Falle eine Ernteeinheit 32 mehrere Pflanzenreihen aberntet, können ihr mehrere Mulchgeräte 64 zugeordnet werden, deren Drehachsen rückwärtig der zu erwartenden Einlaufstellen der Pflanzenreihen angeordnet sind. Es wäre auch denkbar, die Mulchgeräte 64 lückenlos oder mit kleinen Lücken über die ganze Arbeitsbreite des Erntevorsatzes 20 zu verteilen.

Das Mulchgerät 64 umfasst zwei sich diametral gegenüber liegende Bearbeitungswerkzeuge 66, die über radiale Arme starr mit einer mittigen Welle 68 verbunden sind. Anstelle starrer Arme könnten die Bearbeitungswerkzeuge 66 auch durch Ketten oder andere, flexible Elemente mit der Welle 68 verbunden sein. Die Bearbeitungswerkzeuge 66 sind als stumpfe Schlagkörper ausgeführt, d.h. kugel- oder zigarrenförmig geformt. Als Bearbeitungswerkzeuge 66 könnten alternativ oder zusätzlich schneidende Messer verwendet werden, wie sie üblicherweise unter Maispflückern eingebaut werden. Diese Messer können starr oder pendelnd mit der Welle 68 verbunden werden.

Die Welle 68 ist an ihrem unteren Ende mit den Armen verbunden und an ihrem oberen Ende in einem Getriebe gelagert. Durch eine Hohlwelle des Getriebes erstreckt sich die Antriebswelle 48 und ist formschlüssig mit der Hohlwelle gekoppelt. Das Getriebe enthält Antriebselemente (nicht gezeigt), welche die Hohlwelle (und somit die Antriebswelle 48) und die Welle 68 antriebsmäßig verbinden, z.B. Kegelräder. Das Getriebe ist gegenüber der Antriebswelle 48 und dem unteren Querträger 42 um die Achse der Antriebswelle 48 frei schwenkbar gelagert. Das Getriebe und somit die Welle 68 können frei um die Drehachse der Antriebswelle 48 rotieren. Das Getriebe ist mit einem Abdeckblech 70 verbunden, das sich nach hinten und unten erstreckt und sich mit seinem rückwärtigen und unteren Ende auf dem Boden abstützt. Eine Feder oder ein Aktor (nicht gezeigt, s. aber EP 3 269 223 A1) können das Getriebe und somit die Welle 68 und das Abdeckblech 70 nach unten (in Figur 1 im Uhrzeigersinn) vorspannen, um einen bestimmten Bodendruck zu erzeugen und sicherzustellen, dass das Mulchgerät 64 in einer gewünschten Orientierung gegenüber dem Boden bleibt. Das Mulchgerät 64 und dessen Anbringung wird in der EP 3 269 223 A1, deren Offenbarung durch Verweis mit in die vorliegenden Unterlagen aufgenommen wird, noch detaillierter beschrieben.

Ein Sensor 72 ist am Erntevorsatz 20 abgestützt und erfasst die Drehstellung des Abdeckbleches 70 und somit des Mulchgeräts 64 um seine Drehachse, die hier mit der Dreh- und Längsachse der Antriebswelle 48 zusammenfällt. Ein weiterer Sensor 74 erfasst die Stellung eines Höhenfühlers 76, der dem Mulchgerät 64 vorgelagert am Erntevorsatz 20 angebracht ist, in der dargestellten Ausführungsform an einer Teilerspitze 34.

Der Sensor 72 und der weitere Sensor 74 sind mit der Steuereinrichtung 62 verbunden, welche den ersten Aktor 48 und den zweiten Aktor 60 basierend auf den Signalen der Sensoren 72, 74 kontrolliert. Durch die beiden Aktoren 48 und 60 stehen zwei Freiheitsgrade (nämlich die Drehwinkel um die Achsen 56 und 58) zur Verfügung, die es ermöglichen, einerseits das Mulchgerät 64 in einer geeigneten Arbeitshöhe bzw. mit einem geeigneten Arbeitswinkel mit einer Neigung des Winkels der Welle 68 (von z.B. ca. 30° gegenüber der Vertikalen nach hinten und oben) über dem Erdboden laufen zu lassen und andererseits die Ernteeinheiten 32 mit einem geeigneten Winkel gegenüber dem Erdboden auszurichten, sodass die Drehachsen der Ernteeinheiten 32 beispielsweise gegenüber der Vertikalen in einem Winkel von 10° nach vorn und oben geneigt sein können. Die Steuereinrichtung 62 nutzt somit die Signale der Sensoren 72, 74, um die Aktoren 48, 60 derart anzusteuern, dass die gewünschten Winkel (bzw. diesen Winkeln entsprechende Werte der Sensoren 70, 72) erreicht werden.

Da bei der vorliegenden Ausführungsform der Winkel des Mulchgeräts 64 gegenüber der Vertikalen durch den Sensor 72 erfasst wird, wird die Höhe des rückwärtigen Teils des Erntevorsatzes 20 durch die Steuereinrichtung 62 derart kontrolliert, dass dieser Winkel einem Sollwert entspricht. Die Neigung des Erntevorsatzes 20 und somit der Winkel der Ernteeinheiten 32 in der Zeichenebene der Figur 1 ist dann der zweite, durch die Steuereinrichtung 62 kontrollierte Freiheitsgrad. Dabei kann in einer einfachen Ausführungsform der Sensor 74 nur den Aktor 60 kontrollieren und der Sensor 72 nur den Aktor 48 steuern. Da die Verstellung eines der Aktoren 48, 60 immer die Signale beider Sensoren 72, 74 beeinflusst, wird die Änderung des Signals eines Sensors 72 oder 74 stets eine sukzessive Verstellung beider Aktoren 48 und 60 zur Folge haben, bis die Höhe des Erntevorsatzes 20 und dessen Neigung in Querrichtung wieder den Sollwerten entsprechen. Bei einer anderen Ausführungsform könnte die Steuereinrichtung 62 eine Tabelle oder Datenbank umfassen, die Steuersignale an beide Aktoren 48, 60 in Abhängigkeit von den Signalen beider Sensoren 72, 74 beinhaltet.

Die beschriebene Anordnung zur Steuerung der Höhe und Neigung des Erntevorsatzes 20 ermöglicht es nicht nur, die Aktoren 48, 60 in einer den Bodenkonturen folgenden Weise anzusteuern, sondern reagiert auch selbsttätig auf eventuelle Änderungen der Lage der Drehachse 58, die beispielsweise eine Folge der Montage von Rädern 14 einer anderen Größe oder einer Änderung des Drucks in den Reifen der Räder 14 oder eines Einsinkens der Räder 14 in den Boden sein kann, denn in allen diesen Fällen wird die Änderung durch die Sensoren 72 und 74 erfasst und durch die Aktoren 48, 60 ausgeglichen.

Schließlich sei noch angemerkt, dass mehrere Höhenfühler 76 mit Sensoren 74 und Mulchgeräte 64 mit Sensoren 72 über die Breite des Erntevorsatzes 20 verteilt sein und von der Steuereinrichtung 62 zur Ansteuerung eines Aktors (nicht gezeigt) verwendet werden können, der den Erntevorsatz 20 gegenüber dem Einzugsförderer 30 um eine sich horizontal und in Vorwärtsrichtung erstreckende Achse verstellt.

### 19192796.1 - Beschreibung für den Vertragsstaat DE

Die Erfindung betrifft eine selbstfahrende Erntemaschine.

### Stand der Technik

Zur Ernte von stängelartigem Erntegut werden üblicherweise für die Getreideernte Schneidwerke und für die Maisernte Pflücker oder Maismähvorsätze verwendet. Diese Erntevorsätze werden an selbstfahrenden Erntemaschinen, wie Mähdreschern oder Feldhäckslern montiert und fördern im Erntebetrieb das abgeschnittene Erntegut in einen Einzugsförderer der Erntemaschine.

Da es für die ordnungsgemäße Funktion der Schneideinrichtung ist es wichtig, dass sie in einem bestimmten Winkel gegenüber dem Erdboden gehalten wird. Während die Schneidwerke und ihre Messer näherungsweise parallel zum Erdboden orientiert sein sollten beträgt dieser Winkel bei Maismähvorsätzen etwa 10°. Zudem sollte der Erntevorsatz in einer vorbestimmten Höhe über dem Erdboden geführt werden, um einerseits einen möglichst hohen Anteil des Ernteguts aufzunehmen, andererseits aber nicht in Erhebung des Bodens einzudringen. Für die Höhensteuerung des Erntevorsatzes werden geeignete Sensoren verwendet, die mechanisch oder berührungslos die Höhe des Erntevorsatzes über dem Boden erfassen und mit einer Steuerung verbunden sind, welche ihrerseits mittels eines fremdkraftbetätigten Aktors den Drehwinkel des Einzugsförderers der Erntemaschine um eine horizontal und quer zur Vorwärtsrichtung verlaufende Achse verstellen.

Der Winkel des Erntevorsatzes gegenüber dem Erdboden hängt von der Bodenkontur und auch von Parametern der Erntemaschine ab, insbesondere von der Größe der Räder. Zwecks einer Anpassung des Winkels des Erntevorsatzes beispielsweise an die Radgröße der Erntemaschine wurde eine mechanische Verstellung des Winkels des Erntevorsatzes gegenüber dem Einzugsförderer um die horizontal und quer zur Vorwärtsrichtung verlaufende Achse vorgeschlagen (DE 199 16 645 A1, DE 10 2010 028 605 A1), die jedoch während des laufenden Erntebetriebs keine Verstellung ermöglicht, um beispielsweise eine Anpassung an die Bodenkontur durchzuführen. Eine Verstellung des Erntevorsatzes um gegenüber dem Einzugsförderer um die horizontal und quer zur Vorwärtsrichtung verlaufende Achse mittels sensorbasierter, die Bodenkontur erfassender Sensoren wurde in der DE 295 19 842 U1, EP 1 145 619 A1 und EP 1 374 661 A1 beschrieben. Diese Anordnungen benötigen zwei Sensoren, von denen einer die Höhe des Schneidwerks über dem Boden misst, während ein zweiter Sensor dazu dient, die Erntemaschine durch Verstellung von höhenverstellbaren Rädern horizontal zu halten und auch den Schwenkwinkel des Erntevorsatzes steuert (DE 295 19 842 U1, EP 1 145 619 A1), während die EP 1 374 661 A1 vorschlägt, an zwei in Fahrtrichtung beabstandeten Stellen die Höhe des Erntevorsatzes über dem Boden zu erfassen und auf der daraus abgeleiteten Bodenneigung basierend die Aktoren zur Höhen- und Neigungsverstellung des Erntevorsatzes anzusteuern. Hierzu werden beispielsweise vom Erntevorsatz aus nach vorn blickende, berührungslos arbeitende Sensoren und in Fahrtrichtung dahinter angeordnete Tastbügel verwendet.

Unterhalb von Erntevorsätzen zur Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*)*.* Ein Maismähvorsatz mit einem derartigen Mulchgerät wird in der als gattungsbildend angesehenen EP 3 269 223 A1 gezeigt. Das um die Querachse frei schwenkbar am Erntevorsatz angebrachte Mulchgerät wird durch eine Feder oder einen Aktor nach unten vorgespannt und folgt mit einer Kufe der Bodenkontur.

Die nach dem Prioritäts- und Anmeldetag der vorliegenden Anmeldung veröffentlichte DE 10 2018 105 858 A1 zeigt eine Erntemaschine mit einem Maiserntevorsatz, der mit Mulchgeräten ausgestattet ist. Die Position der Mulchgeräte gegenüber dem Erntevorsatz wird erfasst und dient zu dessen Höhensteuerung und in einer anderen Ausführungsform, in Verbindung mit dem Mulchgerät vorgelagerten Höhensensoren, zur Kontrolle des Schnittwinkels des Erntevorsatzes.

### Aufgabe

Als nachteilig wird im Stand der Technik angesehen, dass zur Höhen- und/oder Neigungsverstellung des Erntevorsatzes zusätzliche Sensoren benötigt werden, die mechanisch oder berührungslos die Höhe des Erntevorsatzes über dem Boden erfassen, oder dass man eine sich in aufwändiger Weise selbsttätig gegenüber dem Erdboden ausrichtende Erntemaschine benötigt. Die berührungslosen Sensoren sind relativ preisaufwändig und die mechanischen Sensoren verhältnismäßig empfindlich gegen Beschädigungen.

Es wird demnach angestrebt, den erwähnten Nachteil zu vermeiden oder zu vermindern.

### Lösung

Diese Aufgabe wird erfindungsgemäß durch die Lehre des Patentanspruchs 1, wobei in dem weiteren Patentanspruch Merkmale aufgeführt sind, die die Lösung in vorteilhafter Weise weiterentwickeln.

Eine Erntemaschine umfasst einen Erntevorsatz zur Ernte stängelartigen Ernteguts und eine Anordnung zur Steuerung der Höhe und/oder Neigung des Erntevorsatzes. Die Anordnung umfasst eine Steuereinrichtung, die mit einem Sensor zur Erfassung der Höhe des Erntevorsatzes über dem Boden und einem Aktor zur Kontrolle der Höhe und/oder Neigung des Erntevorsatzes verbunden und betreibbar ist, den Aktor abhängig von Signalen des Sensors zu kontrollieren. Am Erntevorsatz ist ein Mulchgerät mit einem Bearbeitungswerkzeug zur Zerkleinerung von Pflanzenstümpfen höhenbeweglich und der Bodenkontur folgend angebracht und der Sensor ist zur Erfassung der Position des Mulchgeräts gegenüber dem Erntevorsatz eingerichtet.

Mit anderen Worten ist der zur Ernte stängelartigen Ernteguts vorgesehene Erntevorsatz mit einem Mulchgerät zur Bearbeitung der nach dem Ernte im Boden verbleibenden Pflanzenstümpfe versehen, das höhenbeweglich und der Bodenkontur folgend am Erntevorsatz abgestützt ist. Die Position des Mulchgeräts gegenüber dem Erntevorsatz wird mittels eines Sensors erfasst, dessen Signale an eine Steuereinrichtung übergeben werden, die darauf basierend einen Aktor zur Verstellung der Höhe des Erntevorsatzes über dem Boden und/oder dessen Neigung um die Querachse kommandiert. Auf diese Weise erfüllt das Mulchgerät zwei Zwecke, nämlich das Bearbeiten der Pflanzenstümpfe und es dient als Fühler für den Sensor zur Ansteuerung des Aktors.

Die Steuereinrichtung ist mit einem ersten Aktor zur Kontrolle der Neigung des Erntevorsatzes um die horizontal und quer zur Vorwärtsrichtung verlaufende Achse, mit einem zweiten Aktor zur Kontrolle der Höhe des Erntevorsatzes gegenüber dem Erdboden und einem weiteren Sensor zur Erfassung der Höhe des Erntevorsatzes gegenüber dem Erdboden verbunden, der dem Mulchgerät bezüglich der Vorwärtsrichtung des Erntevorsatzes vorgelagert ist.

Die Steuereinrichtung kann betreibbar sein, die Aktoren im Sinne eines Einhaltens eines vorbestimmten Winkels oder Höhe des Mulchgeräts gegenüber dem Boden und eines vorbestimmten Winkels oder einer vorbestimmten Höhe des Erntevorsatzes gegenüber dem Boden einzustellen.

Der erste Aktor verstellt den Winkel des Erntevorsatzes gegenüber einem Einzugsförderer einer selbstfahrenden Erntemaschine um die horizontal und quer zur Vorwärtsrichtung verlaufende Achse und der zweite Aktor den Winkel des Einzugsförderers gegenüber der Erntemaschine um die horizontal und quer zur Vorwärtsrichtung verlaufende Achse.

### Ausführungsbeispiel

In der Zeichnung wird ein nachfolgend näher beschriebenes Ausführungsbeispiel dargestellt.

Die Figur 1 zeigt eine Seitenansicht einer Erntemaschine mit einem daran angebrachten Erntevorsatz, an dem ein oder mehrere Mulchgeräte angebracht sind, mit einer Anordnung zur Steuerung der Höhe und Neigung eines Erntevorsatzes.

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Mais, wird über einen Einzugsförderer 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen in Form von Maispflückern oder Schneidwerken Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekannter Maismähvorsatz, der einen Mittelteil und zwei (bezüglich der Vorwärtsrichtung der Erntemaschine 10) seitlich links und rechts neben dem Mittelteil angeordneten Seitenteile umfasst. Die Seitenteile sind zum Straßentransport nach oben schwenkbar am Mittelteil befestigt und können zum Ernteeinsatz hydraulisch heruntergeschwenkt werden, so dass sie beim Erntebetrieb parallel zum Mittelteil verlaufen.

Der Erntevorsatz 20 ist in an sich bekannter Weise mit aus unteren Schneidscheiben und darüber angeordneten Förderscheiben mit um den Umfang verteilten Aussparungen zur Aufnahme von Pflanzenstängeln aufgebauten Ernteeinheiten 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie über Querfördertrommeln und Abgabefördertrommeln dem mit Einzugswalzen ausgestatteten Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil und eines jedem Seitenteil zugeordnet ist. An der Vorderseite des unteren Querträgers 42 sind Getriebegehäuse 46 angeschraubt, die zum Antrieb jeweils einer Ernteeinheit 32 dienen. Eine Antriebswelle 48 zum Antrieb der Ernteeinheiten 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42.

Der obere Querträger 44 erstreckt sich in seitlicher Richtung oberhalb des Einlasses des Einzugsgehäuses 30 über dessen Breite. Er ist durch einen ersten Aktor 48 mit einer rückwärtigen Rahmenanordnung 50 verbunden, die sich durch hakenförmige Tragelemente 52 an komplementären Tragelementen 54 des Gehäuses des Einzugsförderers 30 abstützt. Der obere Querträger 44 ist durch sich vertikal erstreckende Träger und Verbindungsbleche mit dem unteren Querträger 42 verbunden. Die Rahmenanordnung 50 ist durch eine untere Schwenkachse 56 mit dem unteren Querträger 42 verbunden. Im Ergebnis ermöglicht es der erste Aktor 48, den Erntevorsatz 20 mit den Querträgern 42, 44 gegenüber der Rahmenanordnung 50 um die Schwenkachse 56, die sich horizontal und quer zur Vorwärtsrichtung erstreckt, zu drehen. Die Rahmenanordnung 50 ist durch die Tragelemente 52 lösbar am Einzugsförderer 30 angebracht. Zur Verstellung des Erntevorsatzes 20 um die Schwenkachse 56 könnte auch eine beliebige andere Verstellanordnung dienen, die eine Schwenkachse an der Oberseite des Einzugsförderers 30 oder an beliebiger anderer Stelle vorsieht.

Die Neigung des Einzugsförderers 30 um eine horizontal und quer zur Vorwärtsrichtung orientierte Drehachse 58, die beispielsweise mit der Drehachse der Häckseltrommel zusammen fallen kann, und (gemeinsam mit dem ersten Aktor 48) die Höhe und Neigung des Erntevorsatzes 20 über dem Erdboden bestimmt, wird durch einen zweiten Aktor 60 bestimmt, der von einer Steuereinrichtung 62 kontrolliert wird.

Rückwärtig jeder Ernteeinheit 32 ist jeweils ein Mulchgerät 64 angebracht. Das Mulchgerät 64 ist mit seiner Drehachse in seitlicher Richtung rückwärtig von der Drehachse der zugehörigen Ernteeinheit 32 angeordnet. Dort laufen im normalen Erntebetrieb die Pflanzen ein. Falle eine Ernteeinheit 32 mehrere Pflanzenreihen aberntet, können ihr mehrere Mulchgeräte 64 zugeordnet werden, deren Drehachsen rückwärtig der zu erwartenden Einlaufstellen der Pflanzenreihen angeordnet sind. Es wäre auch denkbar, die Mulchgeräte 64 lückenlos oder mit kleinen Lücken über die ganze Arbeitsbreite des Erntevorsatzes 20 zu verteilen.

Das Mulchgerät 64 umfasst zwei sich diametral gegenüber liegende Bearbeitungswerkzeuge 66, die über radiale Arme starr mit einer mittigen Welle 68 verbunden sind. Anstelle starrer Arme könnten die Bearbeitungswerkzeuge 66 auch durch Ketten oder andere, flexible Elemente mit der Welle 68 verbunden sein. Die Bearbeitungswerkzeuge 66 sind als stumpfe Schlagkörper ausgeführt, d.h. kugel- oder zigarrenförmig geformt. Als Bearbeitungswerkzeuge 66 könnten alternativ oder zusätzlich schneidende Messer verwendet werden, wie sie üblicherweise unter Maispflückern eingebaut werden. Diese Messer können starr oder pendelnd mit der Welle 68 verbunden werden.

Die Welle 68 ist an ihrem unteren Ende mit den Armen verbunden und an ihrem oberen Ende in einem Getriebe gelagert. Durch eine Hohlwelle des Getriebes erstreckt sich die Antriebswelle 48 und ist formschlüssig mit der Hohlwelle gekoppelt. Das Getriebe enthält Antriebselemente (nicht gezeigt), welche die Hohlwelle (und somit die Antriebswelle 48) und die Welle 68 antriebsmäßig verbinden, z.B. Kegelräder. Das Getriebe ist gegenüber der Antriebswelle 48 und dem unteren Querträger 42 um die Achse der Antriebswelle 48 frei schwenkbar gelagert. Das Getriebe und somit die Welle 68 können frei um die Drehachse der Antriebswelle 48 rotieren. Das Getriebe ist mit einem Abdeckblech 70 verbunden, das sich nach hinten und unten erstreckt und sich mit seinem rückwärtigen und unteren Ende auf dem Boden abstützt. Eine Feder oder ein Aktor (nicht gezeigt, s. aber EP 3 269 223 A1) können das Getriebe und somit die Welle 68 und das Abdeckblech 70 nach unten (in Figur 1 im Uhrzeigersinn) vorspannen, um einen bestimmten Bodendruck zu erzeugen und sicherzustellen, dass das Mulchgerät 64 in einer gewünschten Orientierung gegenüber dem Boden bleibt. Das Mulchgerät 64 und dessen Anbringung wird in der EP 3 269 223 A1, deren Offenbarung durch Verweis mit in die vorliegenden Unterlagen aufgenommen wird, noch detaillierter beschrieben.

Ein Sensor 72 ist am Erntevorsatz 20 abgestützt und erfasst die Drehstellung des Abdeckbleches 70 und somit des Mulchgeräts 64 um seine Drehachse, die hier mit der Dreh- und Längsachse der Antriebswelle 48 zusammenfällt. Ein weiterer Sensor 74 erfasst die Stellung eines Höhenfühlers 76, der dem Mulchgerät 64 vorgelagert am Erntevorsatz 20 angebracht ist, in der dargestellten Ausführungsform an einer Teilerspitze 34.

Der Sensor 72 und der weitere Sensor 74 sind mit der Steuereinrichtung 62 verbunden, welche den ersten Aktor 48 und den zweiten Aktor 60 basierend auf den Signalen der Sensoren 72, 74 kontrolliert. Durch die beiden Aktoren 48 und 60 stehen zwei Freiheitsgrade (nämlich die Drehwinkel um die Achsen 56 und 58) zur Verfügung, die es ermöglichen, einerseits das Mulchgerät 64 in einer geeigneten Arbeitshöhe bzw. mit einem geeigneten Arbeitswinkel mit einer Neigung des Winkels der Welle 68 (von z.B. ca. 30° gegenüber der Vertikalen nach hinten und oben) über dem Erdboden laufen zu lassen und andererseits die Ernteeinheiten 32 mit einem geeigneten Winkel gegenüber dem Erdboden auszurichten, sodass die Drehachsen der Ernteeinheiten 32 beispielsweise gegenüber der Vertikalen in einem Winkel von 10° nach vorn und oben geneigt sein können. Die Steuereinrichtung 62 nutzt somit die Signale der Sensoren 72, 74, um die Aktoren 48, 60 derart anzusteuern, dass die gewünschten Winkel (bzw. diesen Winkeln entsprechende Werte der Sensoren 70, 72) erreicht werden.

Da bei der vorliegenden Ausführungsform der Winkel des Mulchgeräts 64 gegenüber der Vertikalen durch den Sensor 72 erfasst wird, wird die Höhe des rückwärtigen Teils des Erntevorsatzes 20 durch die Steuereinrichtung 62 derart kontrolliert, dass dieser Winkel einem Sollwert entspricht. Die Neigung des Erntevorsatzes 20 und somit der Winkel der Ernteeinheiten 32 in der Zeichenebene der Figur 1 ist dann der zweite, durch die Steuereinrichtung 62 kontrollierte Freiheitsgrad. Dabei kann in einer einfachen Ausführungsform der Sensor 74 nur den Aktor 60 kontrollieren und der Sensor 72 nur den Aktor 48 steuern. Da die Verstellung eines der Aktoren 48, 60 immer die Signale beider Sensoren 72, 74 beeinflusst, wird die Änderung des Signals eines Sensors 72 oder 74 stets eine sukzessive Verstellung beider Aktoren 48 und 60 zur Folge haben, bis die Höhe des Erntevorsatzes 20 und dessen Neigung in Querrichtung wieder den Sollwerten entsprechen. Bei einer anderen Ausführungsform könnte die Steuereinrichtung 62 eine Tabelle oder Datenbank umfassen, die Steuersignale an beide Aktoren 48, 60 in Abhängigkeit von den Signalen beider Sensoren 72, 74 beinhaltet.

Die beschriebene Anordnung zur Steuerung der Höhe und Neigung des Erntevorsatzes 20 ermöglicht es nicht nur, die Aktoren 48, 60 in einer den Bodenkonturen folgenden Weise anzusteuern, sondern reagiert auch selbsttätig auf eventuelle Änderungen der Lage der Drehachse 58, die beispielsweise eine Folge der Montage von Rädern 14 einer anderen Größe oder einer Änderung des Drucks in den Reifen der Räder 14 oder eines Einsinkens der Räder 14 in den Boden sein kann, denn in allen diesen Fällen wird die Änderung durch die Sensoren 72 und 74 erfasst und durch die Aktoren 48, 60 ausgeglichen.

Schließlich sei noch angemerkt, dass mehrere Höhenfühler 76 mit Sensoren 74 und Mulchgeräte 64 mit Sensoren 72 über die Breite des Erntevorsatzes 20 verteilt sein und von der Steuereinrichtung 62 zur Ansteuerung eines Aktors (nicht gezeigt) verwendet werden können, der den Erntevorsatz 20 gegenüber dem Einzugsförderer 30 um eine sich horizontal und in Vorwärtsrichtung erstreckende Achse verstellt.

## Patentansprüche (Patentansprüche für folgende(n) Vertragsstaat(en): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Selbstfahrende Erntemaschine (10) mit einem Erntevorsatz (20) zur Ernte stängelartigen Ernteguts und einer Anordnung zur Steuerung der Höhe und/oder Neigung des Erntevorsatzes (20), wobei die Anordnung mit einer Steuereinrichtung (62) versehen ist, die mit einem Sensor (72) zur Erfassung der Höhe des Erntevorsatzes (20) über dem Boden und einem Aktor (48, 60) zur Kontrolle der Höhe und/oder Neigung des Erntevorsatzes (20) verbunden und betreibbar ist, den Aktor (48, 60) abhängig von Signalen des Sensors (72) zu kontrollieren, **dadurch gekennzeichnet dass** am Erntevorsatz (20) ein Mulchgerät (64) mit einem Bearbeitungswerkzeug (66) zur Zerkleinerung von Pflanzenstümpfen höhenbeweglich und der Bodenkontur folgend angebracht ist, wobei der Sensor (72) zur Erfassung der Position des Mulchgeräts (64) gegenüber dem Erntevorsatz (20) eingerichtet ist.

2. Erntemaschine (10) nach Anspruch 1, wobei die Steuereinrichtung (62) mit einem ersten Aktor (48) zur Kontrolle der Neigung des Erntevorsatzes (20) um eine horizontal und quer zur Vorwärtsrichtung verlaufende Achse (56), mit einem zweiten Aktor (60) zur Kontrolle der Höhe des Erntevorsatzes (20) gegenüber dem Erdboden und einem weiteren Sensor (74) zur Erfassung der Höhe des Erntevorsatzes (20) gegenüber dem Erdboden verbunden ist, der dem Mulchgerät (64) bezüglich der Vorwärtsrichtung des Erntevorsatzes (20) vorgelagert ist.

3. Erntemaschine (10) nach Anspruch 2, wobei die Steuereinrichtung (62) betreibbar ist, die Aktoren (48, 60) im Sinne eines Einhaltens eines vorbestimmten Winkels des Mulchgeräts (64) gegenüber dem Boden und eines vorbestimmten Winkels des Erntevorsatzes (20) gegenüber dem Boden einzustellen.

4. Erntemaschine (10) nach Anspruch 3, wenn rückbezogen auf Anspruch 2, wobei der erste Aktor (48) den Winkel des Erntevorsatzes (20) gegenüber einem Einzugsförderer (30) um die horizontal und quer zur Vorwärtsrichtung verlaufende Achse (56) verstellt und der zweite Aktor (60) den Winkel des Einzugsförderers (30) gegenüber der Erntemaschine (10) um eine horizontal und quer zur Vorwärtsrichtung verlaufende Achse (58) verstellt.

## Patentansprüche (Patentansprüche für folgende(n) Vertragsstaat(en): DE)

1. Selbstfahrende Erntemaschine (10) mit einem Erntevorsatz (20) zur Ernte stängelartigen Ernteguts und einer Anordnung zur Steuerung der Höhe und/oder Neigung des Erntevorsatzes (20), wobei die Anordnung mit einer Steuereinrichtung (62) versehen ist, die mit einem Sensor (72) zur Erfassung der Höhe des Erntevorsatzes (20) über dem Boden und zumindest einem Aktor (48, 60) zur Kontrolle der Höhe und/oder Neigung des Erntevorsatzes (20) verbunden und betreibbar ist, den Aktor (48, 60) abhängig von Signalen des Sensors (72) zu kontrollieren, **dadurch gekennzeichnet dass** am Erntevorsatz (20) ein Mulchgerät (64) mit einem Bearbeitungswerkzeug (66) zur Zerkleinerung von Pflanzenstümpfen höhenbeweglich und der Bodenkontur folgend angebracht ist, wobei der Sensor (72) zur Erfassung der Position des Mulchgeräts (64) gegenüber dem Erntevorsatz (20) eingerichtet ist und dass die Steuereinrichtung (62) mit einem ersten Aktor (48) zur Kontrolle der Neigung des Erntevorsatzes (20) um eine horizontal und quer zur Vorwärtsrichtung verlaufende Achse (56), mit einem zweiten Aktor (60) zur Kontrolle der Höhe des Erntevorsatzes (20) gegenüber dem Erdboden und einem weiteren Sensor (74) zur Erfassung der Höhe des Erntevorsatzes (20) gegenüber dem Erdboden verbunden ist, der dem Mulchgerät (64) bezüglich der Vorwärtsrichtung des Erntevorsatzes (20) vorgelagert ist und wobei der erste Aktor (48) den Winkel des Erntevorsatzes (20) gegenüber einem Einzugsförderer (30) um die horizontal und quer zur Vorwärtsrichtung verlaufende Achse (56) verstellt und der zweite Aktor (60) den Winkel des Einzugsförderers (30) gegenüber der Erntemaschine (10) um eine horizontal und quer zur Vorwärtsrichtung verlaufende Achse (58) verstellt.

2. Selbstfahrende Erntemaschine (10) nach Anspruch 1, wobei die Steuereinrichtung (62) betreibbar ist, die Aktoren (48, 60) im Sinne eines Einhaltens eines vorbestimmten Winkels des Mulchgeräts (64) gegenüber dem Boden und eines vorbestimmten Winkels des Erntevorsatzes (20) gegenüber dem Boden einzustellen.

## Claims (Claims for the following Contracting State(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Self-propelled combine harvester (10) with a combine header (20) for harvesting thin-stemmed crops and an arrangement for controlling the height and/or incline of the combine header (20), wherein the arrangement is provided with a control device (62) which is connected to a sensor (72) for detecting the height of the combine header (20) above the ground and to an actuator (48, 60) for controlling the height and/or incline of the combine header (20) and which can be operated to control the actuator (48, 60) in dependence on signals of the sensor (72), **characterized in that** a mulching appliance (64) with a cultivating tool (66) for shredding plant stumps is attached to the combine header (20) in a vertically movable manner following the contour of the ground, wherein the sensor (72) is set up to detect the position of the mulching appliance (64) with respect to the combine header (20).

2. Combine harvester (10) according to Claim 1, wherein the control device (62) is connected to a first actuator (48) for controlling the incline of the combine header (20) about a horizontal axis (56) running transversely to the forward direction, to a second actuator (60) for controlling the height of the combine header (20) relative to the ground, and to a further sensor (74) for detecting the height of the combine header (20) relative to the ground, which is mounted in front of the mulching appliance (64) with respect to the forward direction of the combine header (20).

3. Combine harvester (10) according to Claim 2, wherein the control device (62) can be operated to adjust the actuators (48, 60) in the sense of maintaining a predetermined angle of the mulching appliance (64) relative to the ground, and a predetermined angle of the combine header (20) relative to the ground.

4. Combine harvester (10) according to Claim 3, when related to Claim 2, wherein the first actuator (48) adjusts the angle of the combine header (20) about the horizontal axis (56) running transversely to the forward direction, relative to the feed conveyor (30), and the second actuator (60) adjusts the angle of the feed conveyor (30) relative to the combine harvester (10) about a horizontal axis (58) running transversely to the forward direction.

## Claims (Claims for the following Contracting State(s): DE)

1. Self-propelled combine harvester (10) with a combine header (20) for harvesting thin-stemmed crops and an arrangement for controlling the height and/or incline of the combine header (20), wherein the arrangement is provided with a control device (62) which is connected to a sensor (72) for detecting the height of the combine header (20) above the ground and to at least one actuator (48, 60) for controlling the height and/or incline of the combine header (20) and which can be operated to control the actuator (48, 60) in dependence on signals of the sensor (72), **characterized in that** a mulching appliance (64) with a cultivating tool (66) for shredding plant stumps is attached to the combine header (20) in a vertically movable manner following the contour of the ground, wherein the sensor (72) is set up to detect the position of the mulching appliance (64) with respect to the combine header (20), and **in that** the control device (62) is connected to a first actuator (48) for controlling the incline of the combine header (20) about a horizontal axis (56) running transversely to the forward direction, to a second actuator (60) for controlling the height of the combine header (20) relative to the ground, and to a further sensor (74) for detecting the height of the combine header (20) relative to the ground, which is mounted in front of the mulching appliance (64) with respect to the forward direction of the combine header (20) and wherein the first actuator (48) adjusts the angle of the combine header (20) about the horizontal axis (56) running transversely to the forward direction, relative to the feed conveyor (30), and the second actuator (60) adjusts the angle of the feed conveyor (30) relative to the combine harvester (10) about a horizontal axis (58) running transversely to the forward direction.

2. Self-propelled combine harvester (10) according to Claim 1, wherein the control device (62) can be operated to adjust the actuators (48, 60) in the sense of maintaining a predetermined angle of the mulching appliance (64) relative to the ground, and a predetermined angle of the combine header (20) relative to the ground.

## Revendications (Revendications pour l'(les) Etat(s) contractant(s) suivant(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Moissonneuse (10) automotrice comprenant une tête de récolte (20) servant à récolter des produits de récolte en forme de tige et un arrangement destiné à commander la hauteur et/ou l'inclinaison de la tête de récolte (20), l'arrangement étant pourvu d'un dispositif de commande (62), qui est relié à un capteur (72) destiné à détecter la hauteur de la tête de récolte (20) au-dessus du sol et à un actionneur (48, 60) destiné à contrôler la hauteur et/ou l'inclinaison de la tête de récolte (20) et qui peut être utilisé pour contrôler l'actionneur (48, 60) en fonction de signaux du capteur (72), **caractérisée en ce qu'**un rotobroyeur (64) pourvu d'un outil de traitement (66) destiné à déchiqueter des souches de plantes, mobile en hauteur et suivant le contour du sol, est monté sur la tête de récolte (20), le capteur (72) étant conçu pour détecter la position du rotobroyeur (64) par rapport à la tête de récolte (20).

2. Moissonneuse (10) selon la revendication 1, le dispositif de commande (62) étant relié à un premier actionneur (48) destiné à contrôler l'inclinaison de la tête de récolte (20) autour d'un axe (56) qui suit un tracé horizontal et transversal par rapport à la direction vers l'avant, à un deuxième actionneur (60) destiné à contrôler la hauteur de la tête de récolte (20) par rapport au sol et à un capteur supplémentaire (74) destiné à détecter la hauteur de la tête de récolte (20) par rapport au sol, qui est placé en amont du rotobroyeur (64) en référence à la direction vers l'avant de la tête de récolte (20).

3. Moissonneuse (10) selon la revendication 2, le dispositif de commande (62) pouvant être utilisé pour régler les actionneurs (48, 60) dans le sens d'un maintien d'un angle prédéterminé du rotobroyeur (64) par rapport au sol et d'un angle prédéterminé de la tête de récolte (20) par rapport au sol.

4. Moissonneuse (10) selon la revendication 3, en référence à la revendication 2, le premier actionneur (48) réglant l'angle de la tête de récolte (20) par rapport à un convoyeur d'alimentation (30) autour de l'axe (56) qui suit un tracé horizontal et transversal par rapport à la direction vers l'avant et le deuxième actionneur (60) réglant l'angle du convoyeur d'alimentation (30) par rapport à la moissonneuse (10) autour d'un axe (58) qui suit un tracé horizontal et transversal par rapport à la direction vers l'avant.

## Revendications (Revendications pour l'(les) Etat(s) contractant(s) suivant(s): DE)

1. Moissonneuse (10) automotrice comprenant une tête de récolte (20) servant à récolter des produits de récolte en forme de tige et un arrangement destiné à commander la hauteur et/ou l'inclinaison de la tête de récolte (20), l'arrangement étant pourvu d'un dispositif de commande (62), qui est relié à un capteur (72) destiné à détecter la hauteur de la tête de récolte (20) au-dessus du sol et à au moins un actionneur (48, 60) destiné à contrôler la hauteur et/ou l'inclinaison de la tête de récolte (20) et qui peut être utilisé pour contrôler l'actionneur (48, 60) en fonction des signaux du capteur (72), **caractérisée en ce qu'**un rotobroyeur (64) pourvu d'un outil de traitement (66) destiné à déchiqueter des souches de plantes, mobile en hauteur et suivant le contour du sol, est monté sur la tête de récolte (20), le capteur (72) étant conçu pour détecter la position du rotobroyeur (64) par rapport à la tête de récolte (20) et **en ce que** le dispositif de commande (62) est relié à un premier actionneur (48) destiné à contrôler l'inclinaison de la tête de récolte (20) autour d'un axe (56) qui suit un tracé horizontal et transversal par rapport à la direction vers l'avant, à un deuxième actionneur (60) destiné à contrôler la hauteur de la tête de récolte (20) par rapport au sol et à un capteur supplémentaire (74) destiné à détecter la hauteur de la tête de récolte (20) par rapport au sol, qui est placé en amont du rotobroyeur (64) en référence à la direction vers l'avant de la tête de récolte (20) et le premier actionneur (48) réglant l'angle de la tête de récolte (20) par rapport à un convoyeur d'alimentation (30) autour de l'axe (56) qui suit un tracé horizontal et transversal par rapport à la direction vers l'avant et le deuxième actionneur (60) réglant l'angle du convoyeur d'alimentation (30) par rapport à la moissonneuse (10) autour d'un axe (58) qui suit un tracé horizontal et transversal par rapport à la direction vers l'avant.

2. Moissonneuse (10) automotrice selon la revendication 1, le dispositif de commande (62) pouvant être utilisé pour régler les actionneurs (48, 60) dans le sens d'un maintien d'un angle prédéterminé du rotobroyeur (64) par rapport au sol et d'un angle prédéterminé de la tête de récolte (20) par rapport au sol.
